Europäisches Patentamt

European Patent Office

Office européen des brevets

(11) Veröffentlichungsnummer: **0 151 100**
**A2**

## (12) EUROPÄISCHE PATENTANMELDUNG

(21) Anmeldenummer: 85850029.1

(22) Anmeldetag: 29.01.85

(51) Int. Cl.⁴: **B 23 K 9/28**

(30) Priorität: 01.02.84 SE 8400500

(43) Veröffentlichungstag der Anmeldung: 07.08.85
Patentblatt 85/32

(84) Benannte Vertragsstaaten: **CH DE FR GB IT LI NL SE**

(71) Anmelder: **ESAB Aktiebolag,**
**Box 8004 Herkulesgatan 72, S-402 77 Göteborg (SE)**

(72) Erfinder: **Ulander, Lars Lennart, Baronstigen 1,**
**S-695 00 Laxa (SE)**
Erfinder: **Johansson, Sven-Olof, Porlavägen 14,**
**S-690 33 Hasselfors (SE)**

(74) Vertreter: **Frisch, Kurt, c/o ESAB AB Box 8004,**
**S-402 77 Göteborg (SE)**

(54) **Schweisskopf.**

(57) Ein Schweisskopf für eine schwerschmelzende Elektrode (19) besteht aus einem Gehäuse (1) und einem Elektrodenhalter (2), der mit einer Einrichtung (25) für die Einstellung und das Einspannen der Elektrode versehen ist. Der Elektrodenhalter (2) ist mit dem Gehäuse (1) lösbar verbunden und einfach austauschbar.

Die Erfindung bezieht sich auf einen Schweißkopf mit einer schwerschmelzenden Stabelektrode, der aus einem mit Anschlüssen für die beim Schweißbetrieb erforderlichen Arbeitsmedien versehenen Gehäuse und einem im Gehäuse lösbar angebrachten Elektrodenhalter besteht, welcher mit einer Einrichtung für das Einspannen der Stabelektrode und für die Einstellung der Lage der Elektrodenspitze bezüglich des Schweißkopfes ausgerüstet ist. Schweißköpfe dieser Art werden heutzutage vielfach für Schweißausrüstungen verwendet, die mit Einrichtungen für die automatische Führung des Schweißkopfes längs der Schweißfuge versehen sind. Insbesondere werden derartige Schweißköpfe für Schweißroboter verwendet.

Beim Schweißen wird die aktive Oberfläche der Spitze der schwerschmelzenden Elektrode allmählich durch Elektroerosion abgenutzt. Dadurch ändert sich sowohl der Abstand zwischen der automatisch bewegten Elektrode und dem Arbeitsstück als auch die Form des Lichtbogens wegen der unregelmäßigen Abnutzung der Elektrodenoberfläche. Während der Schweißpausen muß daher der Zustand der Elektroden regelmäßig kontrolliert werden. Stark abgenutzte Elektrodenspitzen müssen auf das richtige Maß zugeschliffen werden. Es ist allzu aufwendig und oftmals überhaupt nicht möglich die automatische Führung des Schweißkopfes längs der Fuge im Hinblick auf die Abnutzung der Elektrode zu korrigieren, da die Form der Abnutzung nicht abschätzbar ist.

Die üblicherweise okuläre Kontrolle des Elektrodenzustandes nimmt wenig Zeit in Anspruch. Dagegen ist der Austausch der abgenutzten gegen eine neugeschliffene Elektrode und deren korrekte Einsstellung bei den bekannten Einrichtungen umständlich und zeitraubend. Ein Schweißkopf dieser Gattung ist durch die US 4 389 559 bekannt geworden. Um den Elektrodenhalter im Gehäuse ein- und ausbauen zu können muß der Schweißkopf doch teilweise zerlegt werden.

Die vorliegende Erfindung zielt darauf ab den Elektrodenwechsel zu erleichtern und zu vereinfachen. Gemäß der
Erfindung ist das hintere Ende des Elektrodenhalters als
Zapfen ausgeführt, in dem die Elektrode koaxial angebracht
ist, und der Zapfen ist axial in eine entsprechende Öffnung
des Gehäuses bis zu einer Einspannposition einführbar,
wobei das Gehäuse in der Öffnung und/oder der Zapfen mit in
radialer Richtung elastisch nachgebenden Mitteln für die
Führung und für das Festhalten des Elektrodenhalters in der
Einspannposition versehen ist.

Ein zum Austausch vorgesehener Elektrodenhalter kann
während des Betriebes des Schweißkopfes mit einer neuen
Elektrode ausgerüstet werden. Der für die Schweißarbeit
erforderliche Elektrodenabstand läßt sich bereits genau
einstellen, bevor der Elektrodenhalter in der stets
gleichen Einspannposition im Gehäuse eingespannt wird. Der
Austausch des Elektrodenhalters ist rasch durchführbar, da
dieser durch eine Bewegung in nur einer Richtung - nämlich
axial - sowohl aus dem Gehäuse entnommen als auch eingeführt wird. Dies ist besonders vorteilhaft, wenn auch der
Austausch des Schweißkopfes automatisch durchgeführt werden
soll. Es ist einleuchtend, daß ein derartiger Austausch des
Elektrodenhalters nur sehr wenig Zeit in Anspruch nimmt.

Weitere Vorteile der Erfindung gehen aus der nachfolgenden
Beschreibung im Zusammenhang mit der beigefügten Zeichnung
hervor, die ein Ausführungsbeispiel der Erfindung zeigt.

Fig. 1 zeigt einen Schnitt durch einen Schweißkopf.
Fig. 2 ist ein Schnitt längs II-II, Fig. 3 ein Schnitt
längs III-III und Fig. 4 ein Schnitt längs IV-IV in Fig. 1.
Fig. 5 zeigt eine etwas modifizierte Ausführung des
Schweißkopfes in Fig. 1. Fig. 6 zeigt etwas schematisch
einen Schweißkopf in Verbindung mit einem Schweißroboter.

Der Schweißkopf besteht aus einem Gehäuse 1 und einem Elektrodenhalter 2. Das Gehäuse 1 besitzt einen zylindrischen Metallblock 3 mit einer Hülle 4 aus Isoliermaterial. Am rückwärtigen Ende des Metallblocks sind Nippel 5, 6, 7 für den Anschluß einer Schutzgasleitung und einer Zufluß- und Abflußleitung für das Kühlwasser vorgesehen. Das Schutzgas wird vom Nippel 5 durch einen Kanal 8 einer zylindrischen Öffnung 9 im vorderen Teil des Körpers 3 zugeführt. Das Kühlwasser wird vom Nippel 6 durch einen Kanal 10 einem an der Stirnseite des Metallblocks befindlichen Ringkanal 11 zugeführt, der durch einen Flanschring 12 geschlossen ist. Das Kühlwasser fließt vom Ringkanal 11 durch den Kanal 13 zum Nippel 7, an dem die Abflußleitung angeschlossen wird. Eine Federhülse 14 ist in die Öffnung 9 eingesetzt und besitzt axiale Federlamellen 15, die sich in Richtung zum Zentrum hin elastisch nachgebend auswölben.

Der Elektrodenhalter besitzt einen zylindrischen Zapfen 16 mit einem Flansch 17. In das vordere Ende des Zapfens ist ein Führungsnippel 18 für die Zentrierung einer Wolframelektrode 19 mit Spitze 20 eingeschraubt. Der Führungsnippel 18 ist außerdem mit mehreren um das Zentrum herum ringformig angeordneten Kanälen 21 für das Schutzgas versehen. Eine Gasdüse 23 aus keramischem Material, die auf ein Gewinde 22 des Zapfens 16 aufgeschraubt ist, preßt eine Isolierscheibe 24 an den Flansch 17. Im Zentrum des Zapfens ist eine Spannhülse 25 eingesetzt, die am vorderen Ende mit vier durch Längsschlitze 26 getrennten fingerformigen Spannbacken 27 versehen ist. Das Spannbackenvorderende 28 ist konisch geformt und stützt sich gegen eine entsprechende konische Fläche 29 des Führungsnippels 18. Die Spannhülse 25 wird mittels einer Schraube 30 im Zapfen gehalten. Beim Anziehen der Schraube wird die Spannhülse 25 nach vorne geschoben, wodurch die Spannbacken 27 nach vorne und einwärts gleiten und dabei die in der Spannhülse eingeführte Elektrode 19 einspannen.

Die Lage der Elektrodenspitze 20 bezüglich des Elektrodenhalters wird eingestellt, wenn der Elektrodenhalter aus dem Gehäuse entnommen ist. Die Schraube 30 wird gelöst und die Elektrode so lange verschoben, bis der Abstand zwischen der Isolierscheibe 24 und der Spitze 20 einen vorbestimmten Wert aufweist. Dann wird die Elektrode mit Hilfe der Schraube 30 in dieser Lage festgeklemmt. Der Elektrodenhalter wird so tief ins Gehäuse eingeführt, bis der Flansch 17 in einer entsprechenden Ausnehmung des Flanschringes 12 anliegt. Damit ist auch der Abstand zwischen der Elektrodenspitze 20 und dem Gehäuse 1 eindeutig festgelegt. Für eine bestimmte Schweißarbeit mit automatischer Schweißkopfführung ist somit lediglich der Abstand zwischen Flanschring 12 und Spitze einmal festzustellen. Die Einstellung des Abstandes läßt sich dann stets am Elektrodenhalter einfach durchführen, wenn beispielsweise eine Nachstellung wegen Abnutzung der Elektrode erforderlich ist.

Beim Einführen des Elektrodenhalters 2 in das Gehäuse 1 drückt der Zapfen 16 die Lamellen 15 der Federhülse 14 radial nach außen und wird dabei in der Öffnung geführt und schließlich, wenn der Flansch 17 am Flanschring 12 anliegt, durch die Federkraft festgehalten.

Der Kanal 8 für das Schutzgas mündet in eine durch einen O-Ring 31 abgeschlossene Kammer, die vom Zapfenende und dem Metallblock begrenzt wird. Das Schutzgas strömt weiter durch einen Kanal 32 im Zapfen und zwischen Spannhülse 25 und Zapfen 16 in einen Ringkanal 33 des Führungsnippels 18 und von dort durch die Austrittskanäle 21 in die Gasdüse 23.

Der Nippel 5 für die Schutzgasleitung dient hier auch für den Anschluß einer Schweißstromleiters. Der Strom wird vom Metallblock 3 mittels der hier auch als Kontaktfedern dienenden Lamellen 15 zum Zapfen 16 des Elektrodenhalters überführt. Der Strom wird dann vom Führungsnippel 18 auf die Elektrode überführt. Der Elektrodenhalter ist zwecks Austausch sehr leicht dem Gehäuse zu entnehmen. Die einfache geradlinige Entnahmebewegung läßt sich ohne Schwierigkeit auch automatisch durchführen.

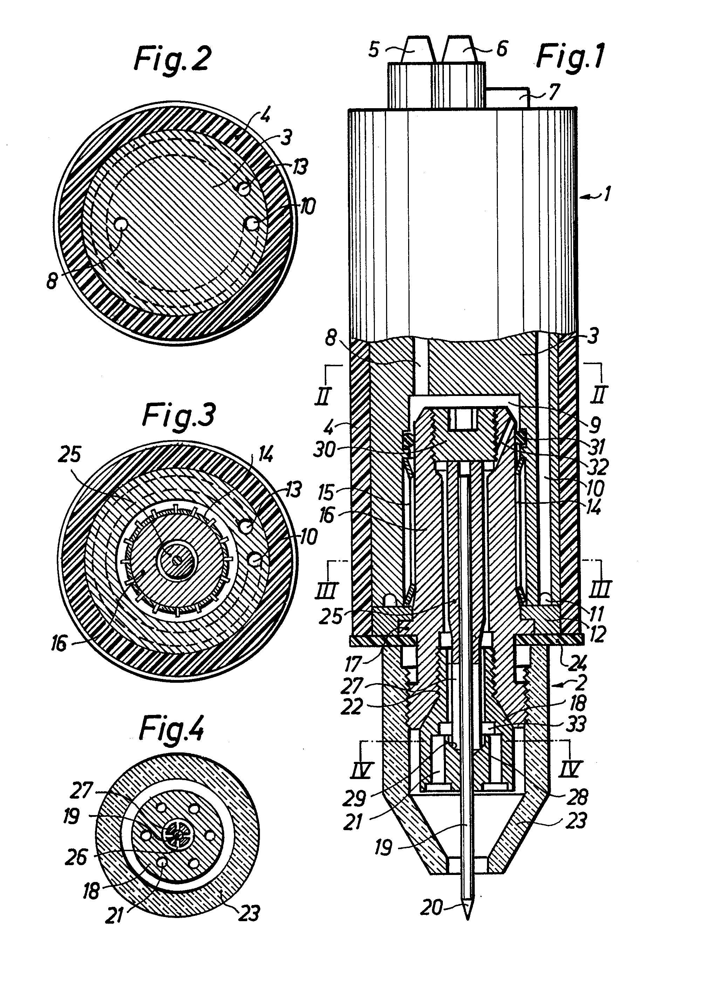

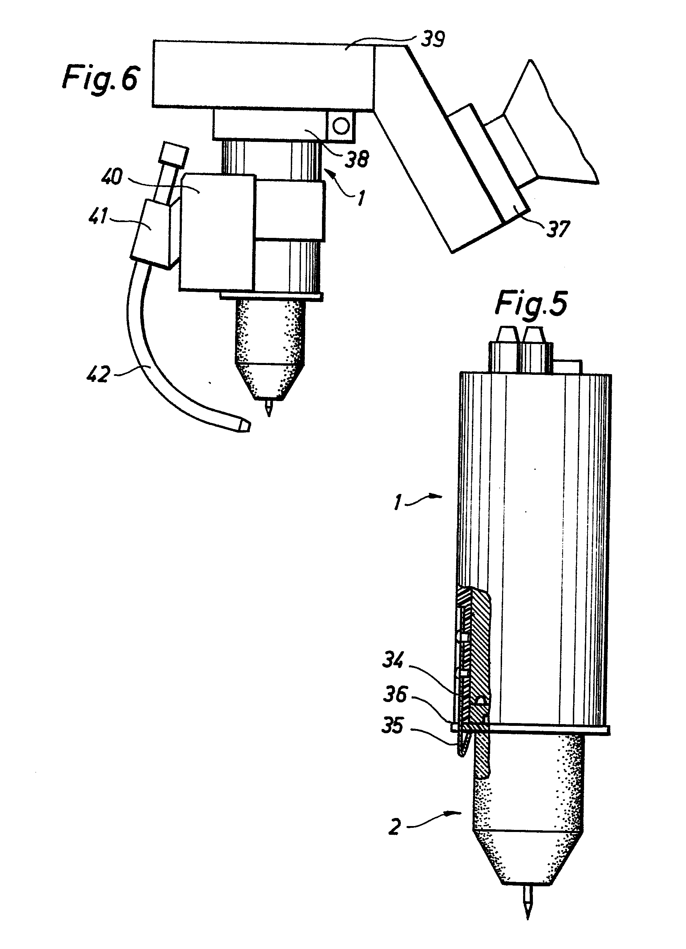

In gewissen Fällen kann es zweckmäßig sein, den Elektrodenhalter durch eine zusätzliche Sperre im Gehäuse festzuhalten (Fig. 5). Dies ist beispielsweise bei solchen Arbeiten vorteilhaft, wo mit Erschütterungen gerechnet werden muß. Zu diesem Zweck ist das Gehäuse 1 mit einer mit Haken 35 versehenen Blattfeder 34 versehen. Beim Einführen des Elektrodenhalters wird die in der Isolierhülle 4 befestigte Blattfeder 34 nach außen gebogen, so daß die Scheibe 24 den Haken 35 passieren kann. Der Haken der Blattfeder schnappt in eine Nut 36 der Isolierscheibe ein, wenn der Elektrodenhalter im Gehäuse eingeführt ist und verhindert eine axiale Bewegung des Elektrodenhalters in der Öffnung 9. Der Elektrodenhalter in Fig. 5 ist im übrigen identisch mit dem Elektrodenhalter gemäß Fig. 1.

In Fig. 6 wird der Schweißkopf in Verbindung mit einem Schweißroboter gezeigt, von dem allerdings nur der vordere Teil des Armes mit der Halterung 37 für das Schweißwerkzeug etwas schematisch dargestellt ist. Das Gehäuse 1 des Schweißkopfes ist mit einer Klammer 38 an einem Gestell 39 der Halterung 37 befestigt. Am Gehäuse ist eine Führung 40 für einen zusätzlichen Schweißdraht montiert. Diese Führung ist mit einem Schlitten 41 für die im Hinblick auf die Elektrode 20 axiale Verschiebung eines Führungsrohres 42 für den Zusatzdraht versehen. Die Anschlußleitungen für Schweißstrom, Schutzgas und Kühlwasser sind nicht dargestellt. Es ist auch beispielsweise denkbar das Gestell 40 mit einem Antrieb zu versehen, mit dem der Schweißkopf um die Elektrodenachse gedreht werden kann.

## Patentansprüche

1. Schweißkopf mit schwerschmelzender Stabelektrode (19), der aus einem mit Anschlüssen für die beim Schweißbetrieb erforderlichen Arbeitsmedien versehenen Gehäuse (1) und einem im Gehäuse lösbar angebrachten Elektrodenhalter (2) besteht, welcher mit einer Einrichtung (25) für das Einspannen der Stabelektrode und für die Einstellung der Lage der Elektrodenspitze (20) bezüglich des Schweißkopfes ausgerüstet ist, dadurch gekennzeichnet, daß das hintere Ende des Elektrodenhalters (2) als Zapfen (16) ausgebildet ist, in dem die Elektrode (19) koaxial angebracht ist, und der Zapfen (16) axial in eine entsprechende Öffnung (9) des Gehäuses bis zu einer Einspannposition einführbar ist, wobei das Gehäuse in der Öffnung und/oder der Zapfen mit in radialer Richtung elastisch nachgebenden Mitteln (14) für die Führung und für das Festhalten des Elektrodenhalters (2) in der Einspannposition versehen ist.

2. Schweißkopf nach Patentanspruch 1, dadurch gekennzeichnet, daß in der Öffnung (9) eine mit dem Zapfen (16) koaxiale radial expandierbare Federhülse (14) angebracht ist, deren Innendurchmesser im unbelasteten Zustand kleiner ist als der Durchmesser des Zapfens.

3. Schweißkopf nach Patentanspruch 2, dadurch gekennzeichnet, daß die Federhülse (14) als Kontaktfeder für die Überführung des Schweißstromes vom Gehäuse (1) zum Elektrodenhalter (2) dient.

4. Schweißkopf nach einem der Patentansprüche 1 bis 3, dadurch gekennzeichnet, daß das Gehäuse (1) und der Elektrodenhalter (2) mit je einem in der genannten Einspannposition zusammenwirkenden Anschlag (12, 17) versehen ist.

5.   Schweißkopf nach einem der Patentansprüche 1 bis 4, dadurch gekennzeichnet, daß der Elektrodenhalter (2) in der Einspannposition durch eine Sperreinrichtung (34, 35) gegen axiale Verschiebung gesichert ist.

*Fig.2*

*Fig.3*

*Fig.4*

*Fig.1*

112

0151100

0151100

Fig.6

39

38

40

1

41

42

Fig.5

1

34

36

35

2